# EUROPEAN PATENT SPECIFICATION

(11) **EP 1 394 393 B1**
(45) Date of publication and mention of the grant of the patent: **13.08.2008**
(21) Application number: 02445105.6
(22) Date of filing: 28.08.2002
(51) Int. Cl.: F02D 33/02, F01N 3/20, F02D 23/02

(54) **Method for controlling combustion engine**
Verfahren zur Steuerung einer Brennkraftmaschine
Procédé de commande d'un moteur à combustion interne

(43) Date of publication of application: 03.03.2004
(73) Proprietor: Ford Global Technologies, Inc., 48126-2490 East Dearborn (US)
(72) Inventor: Almkvist, Göran, 443 31 Lerum (SE); Burgdorf, Klaas, 459 91 Ljungskile (SE); Hakan, Jan, 449 30 Nödinge (SE); Sjöström, Sten, 413 16 Göteborg (SE)
(74) Representative: Mossmark, Anders Lennart

(56) References cited:
- EP-A- 0 454 943
- WO-A-01/31173
- US-A- 4 235 076
- US-A- 5 297 532
- US-A- 6 003 316
- US-B1- 6 314 735
- PATENT ABSTRACTS OF JAPAN vol. 017, no. 133 (M-1383), 19 March 1993 (1993-03-19) & JP 04 311625 A (TOYOTA MOTOR CORP), 4 November 1992 (1992-11-04)
- PATENT ABSTRACTS OF JAPAN vol. 1999, no. 08, 30 June 1999 (1999-06-30) & JP 11 062602 A (TOYOTA MOTOR CORP), 5 March 1999 (1999-03-05)

## Description

### TECHNICAL FIELD

The invention relates to a method and an arrangement for controlling a combustion engine provided with a device for compressing induction air, which engine supplies a heat flow to a catalytic converter arranged in an exhaust conduit downstream from the engine and said induction air compressing device. The invention aims to reduce the time required to reach the starting temperature of the catalytic converter by supplying boost pressure from the induction air compressing device immediately after the engine is started, in order to increase the heat flow to the converter, according to the first part of claim 1 or 4, according to WO-A1-0131173.

### BACKGROUND ART

It is well known in the art to provide automotive vehicles with a combustion engine having a device for compressing induction air, such as a turbocharger or a mechanically driven supercharger, in order to compress the air charge and increase the power output from an engine of a particular displacement. Engines of this type are conventionally provided with heat initiated exhaust treatment devices, or catalytic converters for emission control. Catalytic converters must reach a predetermined temperature, also termed "light-off' temperature, before they become operative. It is desirable to reach light-off temperature as soon as possible after the engine is started in order to reduce the relatively large emissions of hydrocarbons (HC) and carbonoxides (CO) that occur during a cold start.

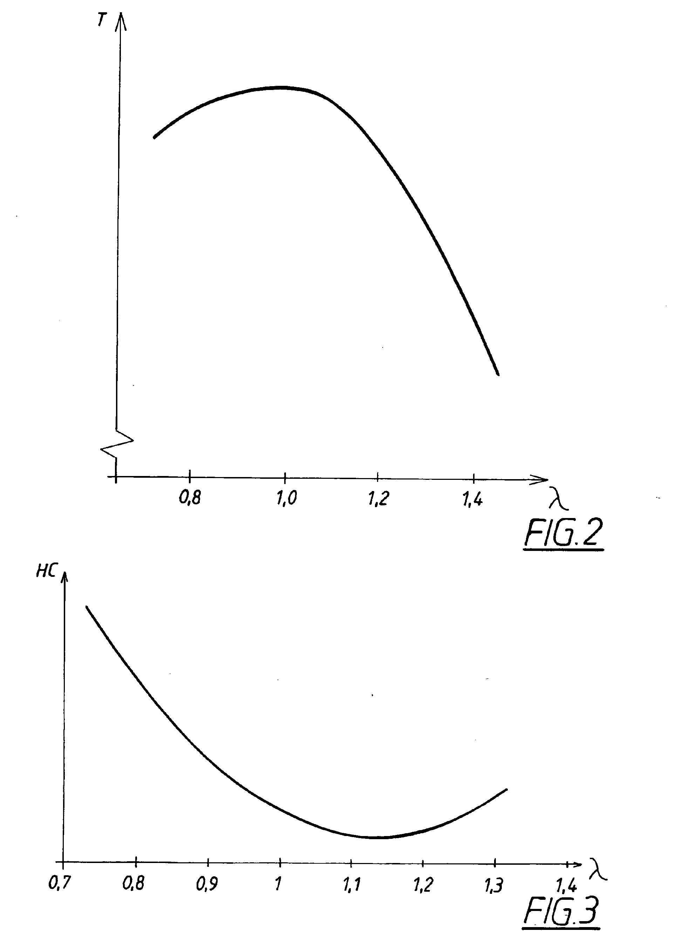

In conventional engine, the air factor λ is maintained at values less than 0,9 during cold start idle. By definition, an air factor λ less than 1 is termed "rich", while a value greater than 1 is termed "lean". The air factor is defined as the quantity of intake air divided by the theoretical air requirement, where the ideal stoichiometric air/fuel ratio (14,5 parts air and 1 part fuel) has an air factor of λ = 1. By keeping the engine in an optimum range of the torque curve and preventing torque variations, the driveability of the vehicle is improved. If torque variations do occur, this is primarily corrected by adjusting the throttle, possibly in combination with an adjustment of the ignition timing. The improved driveability is, however, achieved at the expense of increased HC and CO emissions. Figure 3 shows a diagram giving the HC emissions as a function of the air factor λ.

A known method of achieving this is described in US 4 235 076, in which it is suggested to provide a bypass valve positioned so as to bypass exhaust gases directly to the converter, around a turbocharger device. This document does not describe the engine control in greater detail, but appears to use the standard means of a rich air-fuel mixture and ignition timing to control the engine during starting. As the turbocharger is bypassed, it can not be used for supplying an additional heat flow to the converter to shorten the period of time required to reach light-off.

EP 0 454 943 discloses an exhaust-gas driven variable geometry turbine (VGT) placed between the exhaust valves of an internal combustion engine and a converter. The purpose of this invention is to control the temperature in the exhaust duct by varying the pressure therein in such a way that the converter warms up quickly during a cold start Although not explicitly stated, this arrangement uses rich air-fuel mixture and ignition timing to control the engine during starting. The rich air-fuel mixture will result in a significant increase in HC and CO emissions during the time required for the catalytic converter to warm up and reach its light-off temperature.

A further development of the use of VGT turbochargers for emission control is described in US 6 003 316. This arrangement combines a VGT turbocharger with recirculation of exhaust gas (EGR) and a system for controlling the ratio of recirculated exhaust gas and inlet gas. This arrangement also uses a rich air-fuel mixture and ignition timing to control the engine during start-up, which increases the HC and CO emissions.

As can be seen above, the prior art documents show various arrangements for shortening the time for heating the converter at the expense of the engine out emissions. The problem to be solved by the invention is to reduce the time required for heating the converter to its operating temperature, while reducing the engine out emissions.

### DISCLOSURE OF INVENTION

The object of the present invention is to provide an improved method for controlling a combustion engine during a cold start. This is achieved by means of a method and an arrangement, the characteristics of which are disclosed in accompanying claims 1 and 4 and their respective dependent claims.

According to a preferred embodiment of the invention, the method involves controlling a combustion engine provided with a device for compressing induction air. This device is preferably a turbocharger driven by the exhaust gases, but a mechanically driven compressor can also be used. The engine supplies a heat flow in the form of hot exhaust gas to a catalytic converter arranged in an exhaust conduit downstream from the engine and said induction air compressing device. The heat flow can be increased by supplying a boost pressure from the induction air compressing device immediately after the engine is started. This will reduce the time required to reach the starting, or light-off temperature of the catalytic converter.

The reduction of the HC and CO emissions is achieved by making the engine is run lean and stable during cold start idling. A lean air/fuel ratio will result in a lower engine torque and engine speed as well as less energy being supplied to the turbocharger turbine. Consequently, a richer air-fuel mixture will give the opposite effect.

The conventional method of controlling engine torque and speed during a cold start operation is to use a rich mixture (0,7< λ <0,9) primarily combined with adjustment of the throttle in the intake conduit and secondly by making adjustments to the ignition timing. However, this procedure can not be used for turbocharged engines due to difficulties in controlling the engine speed.

Using conventional throttle and ignition control will result in a non-stable boost control. A spark retardation for a reduction in engine torque increases the fuel consumption and generates more energy to the exhaust turbine, which in turn counteracts the torque loss by providing higher boost pressure. The result will be engine speed variations that are difficult to control by means of throttle and ignition control.

A preferred embodiment of the method according to the invention uses a lean start strategy with an air factor λ>1, preferably within a range of 1,02< λ <1,5, and uses a variable air/fuel ratio for the induction air to control the boost pressure, and thereby the torque output of the engine (see Figure 2). Adjustment of the air/fuel ratio can be achieved by using the throttle for controlling the flow of induction air, whereby the throttle is held at a predetermined constant degree of opening while a fuel injector is used for controlling the amount of fuel in the induction air. The engine control system may use an initial nominal setting that is rich (λ < 1), but as boost pressure is supplied the air/fuel ratio is controlled as described above.

Hence, the engine torque output is primarily controlled by using an adjustable, lean air/fuel ratio and secondly by making adjustments to the throttle valve and the ignition timing. The method is relatively insensitive both to various disturbances in the system as well as to variations in the quality and volatility of the fuel. For a higher grade fuel an adjustment of the air/fuel ratio may be sufficient for proper operation, while a lower grade fuel may require additional adjustment of the throttle valve and the ignition timing.

### BRIEF DESCRIPTION OF DRAWINGS

In the following text, the invention will be described in detail with reference to the attached figures. These figures are used for illustration only and do not in any way limit the scope of the invention. In the drawings:
- Figure 1: shows a schematic diagram illustrating a turbocharged internal combustion engine.
- Figure 2: shows a diagram giving the air factor λ as a function of torque.
- Figure 3: shows a diagram giving the HC emissions as a function of the air factor λ.

### MODES FOR CARRYING OUT THE INVENTION

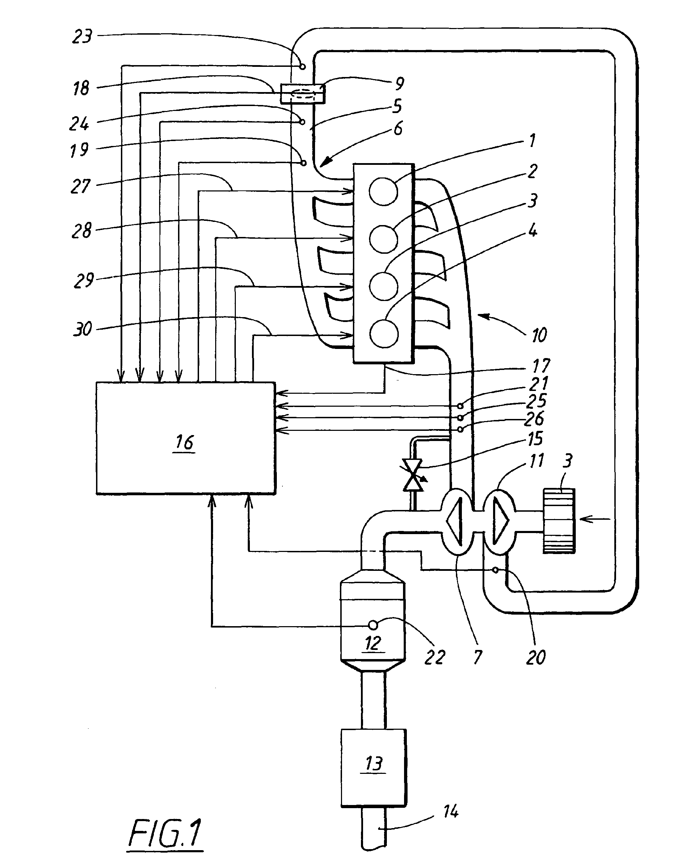

Figure 1 shows a schematic diagram illustrating a turbocharged internal combustion engine. The engine includes at least one cylinder 1-4 containing a reciprocating piston within a combustion chamber, which piston is connected to an output crankshaft (not shown). The engine has an intake system including an intake conduit 5 and an intake manifold 6 connecting the combustion chamber to an outlet of a compressor 7 of a conventional turbocharger. The intake system includes injectors (not shown) for supplying controlled amounts of fuel from a suitable fuel supply system to each cylinder 1-4. The turbocharger compressor 7 is arranged to receive air from an air cleaner 8 and supply compressed air to the intake manifold 6, where the air and fuel is mixed and supplied to the combustion chamber in the form of a combustible air-fuel mixture. The intake conduit 5 is further supplied with a throttle valve 9 that can be opened and closed for controlling the flow of air to the combustion chamber. The opening and closing of the throttle is preferably electronically controlled. Each combustion chamber is provided with an intake valve and an exhaust valve (not shown), arranged to admit an air-fuel mixture and exhaust the combusted residual gases according to a conventional 4-stroke cycle.

Although only one intake and exhaust valve is described, it is of course possible to use more than one intake and exhaust valve. The valves are preferably adjustable, using some form of mechanically or electronically controlled variable valve timing (WT). Depending on the type of engine and control system used, it may also be possible to operate the engine using a 2-, 6- or 8-stroke cycle.

The engine is also provided with an exhaust system including an exhaust manifold 10 connected to the combustion chamber. From the combustion chamber the exhaust gases are conventionally ducted to the inlet of a turbine 11 of the turbocharger, from which they pass to the inlet of a catalytic converter 12 for removing harmful emissions from the exhaust. The outlet of the converter 12 is connected to a conventional exhaust system including a muffler 13 and a tailpipe 14. The exhaust system is further provided with a bypass conduit having a control valve 15, or wastegate, allowing the exhaust gases to bypass the turbocharger turbine 11. The control valve 15 is mainly used for limiting the output pressure of the turbine 11 at high engine speeds.

The engine is controlled by a central processing unit (CPU) 16 that receives a number of input signals from various conventional sensors. The engine is provided with a speed sensor 17 for measuring the number of revolutons of the engine at the end of the crankshaft. The signal from this sensor can also be used for calculation of the output torque. The throttle 9 is provided with a sensor 18 that measures the degree of opening, in order to determine the mass flow of air supplied to the engine. A number of pressure sensors are used to detect pressure levels, e.g. intake conduit and turbocharger boost pressure 19 and 20. A further sensor, such as an oxygen sensor 21, measures the composition of the exhaust gases in order to determine the air factor λ of the combustible air-fuel mixture. The converter 12 is provided with a temperature sensor 22 in order to determine when the light-off, or operating temperature is reached.

Further sensors may include an ambient (intake) air temperature sensor 23 and a separate mass flow sensor 24 in the intake conduit 5. Finally the exhaust conduit may be provided with an exhaust temperature sensor 25 and one or more sensors for specific emissions in the exhaust gases, such as a sensor 26 for nitrous oxides (NOx).

During normal operation the signals are transmitted to the CPU 16, which monitors the signals and uses a suitable predetermined mapping of engine parameters to determine the operating status of the engine. By comparing the current values of a number of characteristic parameters with corresponding desired values for a particular operating condition, the CPU 16 will transmit signals 27-30 to the fuel injectors and/or throttle 9 to correct the current values.

During a cold start operation according to the invention, not all sensors are immediately operational. Initially, the engine speed sensor 17 alone is used, possibly in combination with one or more pressure sensors 19, 20 and/or the throttle angle sensor 18. This will be described in more detail below.

In operation, when the engine is started the CPU 16 will transmit signals to the throttle 9 and fuel injector in accordance with a predetermined data mapping stored in the CPU 16. The initial settings transmitted to the throttle 9 and fuel injector are intended to supply the combustion chamber with a lean air-fuel mixture, preferably with an air factor λ >1,0. Depending on the continuously measured values of the engine speed, the CPU 16 will regulate the composition of the air-fuel mixture. If the engine speed is higher a predetermined value, the CPU 16 will transmit a signal to the fuel injector to reduce the amount of fuel in order to increase the air factor λ. As can be seen from Fig. 2, when the air factor λ is increased, the output torque of the engine, and thereby the speed, is reduced.

The throttle 9 is held at a constant angle during the cold start operation. The angle corresponds to a fully open or near fully open throttle position. The control of the engine and torque output is entirely done by regulating the air-fuel mixture, based on measurements from the sensors and the mapping stored in the CPU 16 as described above. Only when the CPU 16 determines that control of the air-fuel mixture alone is no longer sufficient to maintain running stability of the engine will other means of control be allowed. Hence, if unacceptable variations of engine speed occur, or if the mapping of the CPU 16 determines that a lean air factor λ can no longer be maintained, the CPU 16 will adjust the throttle 9 and/or the ignition timing. The above procedure continues until the catalytic converter reaches its light-off, or operational temperature.

According to an alternative embodiment, not according to the invention the throttle 9 controlling the flow of induction air is adjusted to maintain a relatively constant pressure in the induction air conduit. Control of the engine and the torque output is primarily done by using predetermined base settings of the air-fuel mixture, depending on measurements from the sensors and the mapping stored in the CPU 16 as described above. As for the previous embodiment, only when the CPU 16 determines that controlling the air-fuel mixture alone is no longer sufficient to maintain running stability of the engine will other means of control be allowed. Hence, if unacceptable variations of engine speed occurs, or if the mapping of the CPU 16 determines that a lean air factor λ can no longer be maintained, the CPU 16 will adjust the intake conduit pressure using the throttle 9 and/or the ignition timing. The above procedure continues until the catalytic converter reaches its light-off temperature.

## Claims

1. Method for controlling a combustion engine provided with at least one cylinder (1-4) and a device (7) for compressing induction air, which engine supplies a heat flow to a catalytic converter (12) arranged in an exhaust conduit downstream from the engine and said induction air compressing device (7), wherein the heat flow is increased by supplying boost pressure from the induction air compressing device (7) when the engine is started, in order to reduce the time required to reach the operating temperature of the catalytic converter (12) **characterized in that**, during cold start idling, the method involves running the engine lean; maintaining a throttle (9) controlling the flow of induction air at a constant degree of opening; and controlling a fuel injector to control the air/fuel ratio supplied to each cylinder (1-4) in response to variations in torque output, wherein the variable air/fuel ratio is used to maintain a stable engine speed and to control the boost pressure supplied by the induction air compressing device (7).

2. Method according to claim 1 **characterized in** controlling the fuel injector to maintain an air factor of 1,02 < λ < 1,5.

3. Method according to claim 1 **characterized in that**, if constant throttle operation is no longer possible, a throttle (9) controlling the flow of induction air is adjusted to maintain a relatively constant pressure in the induction air conduit (5) and that a fuel injector is used for injecting fuel for controlling the air/fuel ratio.

4. Internal combustion engine provided with a device (7) for compressing induction air supplied to an induction conduit of at least one cylinder (1-4), which engine is arranged to supply a heat flow to a catalytic converter (12) arranged in an exhaust conduit downstream from the engine and said induction air compressing device (7), that the induction air compressing device (7) is arranged to increase the heat flow to the catalytic converter (12) by supplying a boost pressure from the air compressing device (7) when the engine is started, in order to reduce the time required to reach the operating temperature of the catalytic converter (12) **characterized in that** the engine is arranged to operate with a lean air/fuel mixture during cold start idling; that a throttle (9) controlling the flow of induction air is arranged to be held at a constant degree of opening during cold start operation, and that the engine is provided with a controllable fuel injector for each cylinder (1-4), which injector is arranged to vary the air/fuel ratio of the induction air in response to a signal indicating a variable torque output in order to maintain a stable torque output and to control the boost pressure supplied by the induction air compressing device (7).

5. Internal combustion engine according to claim 4
**characterized in that**, if constant throttle operation is no longer possible, the throttle (9) controlling the flow of induction air is arranged to be adjusted to maintain a relatively constant pressure in the induction air conduit (5) during cold start operation.

## Patentansprüche

1. Verfahren zum Steuern einer Brennkraftmaschine, welche mit wenigstens einem Zylinder (1 - 4) und mit einer Vorrichtung (7) zum Verdichten von Ansaugluft versehen ist, wobei die Maschine einen Wärmestrom an einen Katalysator (12) liefert, der in einem Auslasskanal stromabwärts von der Maschine und der Ansaugluft-Verdichtungsvorrichtung (7) angeordnet ist, wobei der Wärmefluss erhöht wird, indem ein Ladedruck aus der Ansaugluft-Verdichtungsvorrichtung (7) erhöht wird, wenn der Motor gestartet ist, um die Zeit zu reduzieren, die erforderlich ist, um die Betriebstemperatur des Katalysators (12) zu erreichen, **dadurch gekennzeichnet, dass** während eines Kaltstartleerlaufs das Verfahren einen Magerbetrieb der Maschine; die Beibehaltung einer den Strom der Ansaugluft steuernden Drosselklappe (9) bei einem konstanten Öffnungsgrad; und die Steuerung einer Kraftstoffeinspritzeinrichtung zum Steuern des jedem Zylinder (1 - 4) zugeführten Luft/Kraftstoff-Gemisches in Reaktion auf Veränderungen in der Drehmomentabgabe beinhaltet, wobei das variable Luft/Kraftstoff-Verhältnis genutzt wird, um eine stabile Motordrehzahl aufrechtzuerhalten und um den durch die Ansaugluft-Verdichtungsvorrichtung (7) gelieferten Ladedruck zu steuern.

2. Verfahren nach Anspruch 1, **gekennzeichnet durch** eine Steuerung der Kraftstoffeinspritzeinrichtung so, dass ein Luftfaktor von 1,02 < λ < 1,5 eingehalten wird.

3. Verfahren nach Anspruch 1, **dadurch gekennzeichnet, dass**, wenn ein Betrieb mit konstanter Drosselklappenstellung nicht mehr möglich ist, eine den Strom der Ansaugluft steuernde Drosselklappe (9) eingestellt wird, um einen relativ konstanten Druck in dem Ansaugluftkanal (5) aufrechtzuerhalten, und dass eine Kraftstoffeinspritzeinrichtung genutzt wird, um Kraftstoff zum Steuern des Luft/Kraftstoff-Verhältnisses einzuspritzen.

4. Brennkraftmaschine, die mit einer Vorrichtung (7) zum Verdichten von an einen Einlasskanal wenigstens eines Zylinders (1 - 4) gelieferter Ansaugluft versehen ist, wobei die Maschine so angeordnet ist, dass sie einen Wärmestrom an einen Katalysator (12) liefert, der in einem Auslasskanal stromabwärts von der Maschine und der Ansaugluft-Verdichtungsvorrichtung (7) angeordnet ist, dass die Ansaugluft-Verdichtungsvorrichtung (7) so angeordnet ist, dass sie den Wärmefluss erhöht, indem sie einen Ladedruck aus der Ansaugluft-Verdichtungsvorrichtung (7) liefert, wenn der Motor gestartet ist, um die Zeit zu reduzieren, die erforderlich ist, um die Betriebstemperatur des Katalysators (12) zu erreichen, **dadurch gekennzeichnet, dass** die Maschine eingerichtet ist, während eines Kaltstartleerlaufs mit einem mageren Luft/Kraftstoff-Gemisch zu arbeiten; dass eine den Strom der Ansaugluft steuernde Drosselklappe (9) so eingerichtet ist, dass sie bei einem konstanten Öffnungsgrad während des Kaltstartbetriebs gehalten wird; und das die Maschine mit einer steuerbaren Kraftstoffeinspritzeinrichtung für jeden Zylinder (1 - 4) versehen ist, welche so eingerichtet ist, dass sie das Luft/Kraftstoff-Gemisch der Ansaugluft in Reaktion auf ein eine veränderliche Drehmomentabgabe anzeigendes Signal verändert, um eine stabile Motordrehzahl aufrechtzuerhalten und um den durch die Ansaugluft-Verdichtungsvorrichtung (7) gelieferten Ladedruck zu steuern.

5. Verbrennungsmaschine nach Anspruch 4, **dadurch gekennzeichnet, dass**, wenn ein Betrieb mit konstanter Drosselklappenstellung nicht mehr möglich ist, die den Strom der Ansaugluft steuernde Drosselklappe (9) einstellbar eingerichtet ist, um einen relativ konstanten Druck in dem Ansaugluftkanal (5) während des Kaltstartbetriebs aufrechtzuerhalten.

## Revendications

1. Procédé pour commander un moteur à combustion muni d'au moins un cylindre (1 à 4) et d'un dispositif (7) pour comprimer de l'air d'induction, lequel moteur applique un flux de chaleur à un convertisseur catalytique (12) agencé dans un conduit d'échappement en aval par rapport au moteur et audit dispositif de compression d'air d'induction (7), dans lequel le flux de chaleur augmente, en appliquant une pression de suralimentation par le dispositif de compression d'air d'induction (7) lorsque le moteur démarre afin de réduire le temps requis pour atteindre la température de fonctionnement du convertisseur catalytique (12) **caractérisé en ce que**, durant un ralenti de démarrage à froid, le procédé implique l'entraînement du moteur à un régime faible, le maintien d'un obturateur (9) commandant l'écoulement d'air d'induction à un degré d'ouverture constant, et la commande d'un injecteur de combustible pour commander le rapport air/combustible délivré à chaque cylindre (1 à 4) en réaction à des variations de sortie de couple, dans lequel le rapport air/combustible variable est utilisé pour maintenir une vitesse de moteur stable et pour commander la pression de suralimentation appliquée par le dispositif de compression d'air d'induction (7).

2. Procédé selon la revendication 1, **caractérisé par** la commande de l'injecteur de combustible pour maintenir un facteur d'air de 1,02 < λ < 1,5.

3. Procédé selon la revendication 1, **caractérisé en ce que**, si un fonctionnement d'obturateur constant n'est plus possible, un obturateur (9) commandant l'écoulement d'air d'induction est réglé pour maintenir une pression relativement constante dans le conduit d'air d'induction (5) et qu'un injecteur de combustible est utilisé pour injecter du combustible pour commander le rapport air/combustible.

4. Moteur à combustion interne muni d'un dispositif (7) pour compresser de l'air d'induction délivré à un conduit d'induction d'au moins un cylindre (1 à 4), lequel moteur est agencé pour délivrer un flux de chaleur à un convertisseur catalytique (12) agencé dans un conduit d'échappement en aval par rapport au moteur et audit dispositif de compression d'air d'induction (7), de sorte que le dispositif de compression d'air d'induction (7) est agencé pour augmenter le flux de chaleur vers le convertisseur catalytique (12) en appliquant une pression de suralimentation par le dispositif de compression d'air (7) lorsque le moteur démarre afin de réduire le temps requis pour atteindre la température de fonctionnement du convertisseur catalytique (12) **caractérisé en ce que** le moteur est agencé pour fonctionner avec un mélange air/combustible pauvre durant un ralenti de démarrage à froid, qu'un obturateur (9) commandant le flux d'air d'induction est agencé pour être maintenu à un degré d'ouverture constant durant une opération de démarrage à froid, et que le moteur est muni d'un injecteur de combustible contrôlable pour chaque cylindre (1 à 4), lequel injecteur est agencé pour faire varier le rapport air/combustible de l'air d'induction en réaction à un signal indiquant une sortie de couple variable afin de maintenir une sortie de couple stable et de commander la pression de suralimentation appliquée par le dispositif de compression d'air d'induction (7).

5. Moteur à combustion interne selon la revendication 4, **caractérisé en ce que**, si un fonctionnement d'obturateur constant n'est plus possible, l'obturateur (9) commandant le flux d'air d'induction est agencé pour être réglé afin de maintenir une pression relativement constante dans le conduit d'air d'induction (5) durant une opération de démarrage à froid.
